(19) Europäisches Patentamt European Patent Office Office européen des brevets

(11) **EP 1 860 314 A2**

(12) **EUROPEAN PATENT APPLICATION**

(43) Date of publication:
**28.11.2007 Bulletin 2007/48**

(51) Int Cl.:
**F02M 21/02** (2006.01)

(21) Application number: **06013713.0**

(22) Date of filing: **03.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **25.05.2006  PL  37978406**

(71) Applicant: **D.T. Gas System Spólka Jawna, D. Tomaszewska,**
**A. Tomaszewska, N. Tomaszewski**
**60-452 Poznan (PL)**

(72) Inventors:
• **Wendeker, Miroslaw**
  **20-553 Lublin (PL)**
• **Zebrowski, Adam, Andrzej**
  **20-532 Lublin (PL)**

(74) Representative: **Klassek, Maciej Adam**
**Inventconsult,**
**Kancelaria Patentowa,**
**ul. Sowinskiego 1**
**40-272 Katowice (PL)**

(54) **A device for quick and fine metering of gas, especially for metering fuel to combustion engines**

(57)    The invention refers to a gas feed device, enabling quick and fine metering of gas, and in particular metering fuel, especially LPG, to internal combustion engine comprising at least one solenoid valve controlled to feed gas to a corresponding cylinder of the engine; said solenoid valve comprising a gas manifold and at least one outlet conduit for said fuel gas, a corresponding shutter carried by an armature being activated by a corresponding electromagnet to connect said inlet manifold with an outlet conduit; said armature having the form of a spatial lever rotating about an edge located between an external surface and an inclined portion of said armature, and contacting a flat surface of the flat spring, and an elastic member acting on said armature with a predetermined elastic force sufficient to normally keep such shutter in a closed position closing said outlet hole in case no power is supplied to the electromagnet, and said shutter (20), on the side where it contacts a sleeve (22) forms an even surface (R) with the armature and when closed is perpendicular to the nozzle axis (22), and an elastic member (24) acting on said second surface (L) at said inclined portion (J) on the surface of the armature (21) to form a variable lever arm as a function of a valve opening angle. The elastic member (24) forms a line of bodies of elastic material having the shape similar to a spheroid, connected in one row engaged in a recess of the casing body (12) so that its longitudinal axis is parallel to the armatures contact line, wherein, advantageously, at least one side of the row constituting an elastic member (24) is bevelled or it has the shape similar to a spheroid engaged in a recess in the casing body (12) so that its longitudinal axis is parallel to the armature contact line wherein, advantageously, at least one side of the body constituting an elastic member is bevelled or an elastic member (24) is defined by a spring, in particular a conical spiral spring engaged advantageously in the recess in the casing body (12). The force and arm of the lever created by acting of an elastic member (24) on the surface (L) are variable as a function of valve opening time. The valves are controlled by an electronic control unit (10) operating at a frequency not less that the frequency of operation of subsequent cylinders of the engine (01).

Fig. 3

**Description**

The present invention refers to a gas feed device, enabling quick and fine metering of gas, and in particular metering fuel, especially LPG, to internal combustion engine.

With regard to the fact that resources of classic fuels are being depleted, and in view of the cost of petrol and fuel oil, engine fuelling systems based on other fuels, such as LPG, CNG, hydrogen and other combustible gases, have been developed. To reach the engine, gas from the tank is fed through the reducing valve or the reducer vaporizer unit in the case of LPG. The reduced pressure gas is fed to an engine intake manifold, mixed with air and fed to the cylinders of the engine.

In fuelling systems of combustion engines, where the amount of fuel is metered by the carburettor, single point or multi point injection system, and fed with gas, the reducer vaporiser unit is normally connected to the intake manifold by a feed conduit and an air-fuel mixing device. Such feed systems usually have the drawback of failing to precisely meter the fuel and thus the stoichimetric ratio is incorrect, so that the exhaust gas often contains prohibited quantities of contaminating substances and fuel consumption is high.

Various fuel gas feed systems have been proposed, in which the gas from the reducer is fed to a distributor-metering unit connected to the intake manifold of the engine by respective flexible conduits so that the system can be installed easily as the secondary feed system for the existing engine fed with the liquid fuel. In one known system, the fuel gas is fed to the intake conduit of each cylinder by a multiple solenoid valve common to all the cylinders feeding gas to the engine manifold. The solenoid valve comprises a group of shutters, each controlled by an electromagnet armature. In another system, the fuel gas is fed from the intake manifold to particular cylinders by a respective solenoid valve of each of them.

In both cases, the armature of each electromagnet is defined by an oblong plate, which rotates about a line of contact with an edge of a fixed member. Contact is assured by a bar of elastic material acting on one end of the armature plate, which, however, is held in position closing the solenoid valve by a corresponding spring acting on the shutter.

Solenoid valves of this sort have various drawbacks. In particular, the position of the line of contact on the armature may vary due to different component machining and assembly resistance; spring closure makes the solenoid fairly slow-operating. Moreover, the solenoid valve itself is relatively expensive to produce and extremely complicated to assemble and maintain.

In another known solenoid valve for compressed air control circuits, the armature is defined by an oblong plate, has no return spring and is held in the closed position by the pressure of gas fed to the chamber by the compressed air outlet conduit.

This type of solenoid valve is unsuitable for feeding fuel gas to a combustion engine, owing to the very small difference, normally less than 1 bar, in the fuel gas pressure between the inlet and the outlet conduit of the solenoid valve.

From document US 5 653 422 A, it is also known a solenoid valve having a central inlet channel and two outmost channels, these latter projecting into the interior of a chamber with corresponding nozzles. The armature is provided with a blunt edge on the side facing the solenoid, with which it is pivotally supported on the separating surface. The armature has two recesses provided with a relevant seals to alternately close the two nozzles. Spiral springs encompassing the nozzles and engaged in the relevant recess make the armature to normally close one of the nozzles.

From patent document EP 1 267 065 B1, it is known a fuel gas feed device for a combustion engine, comprising at least one solenoid valve controlled to feed gas to a corresponding cylinder of the engine; said solenoid valve comprising an inlet conduit and at least one outlet conduit; said shutter carried by an armature being activated by a corresponding electromagnet to connect said inlet conduit to said outlet conduit; said armature being defined by an oblong plate rotating about an edge located between the first surface and inclined portion of said plate and contacting a flat surface of said fixed member and an elastic member acting on said plate with a predetermined elastic force sufficient to normally keep said shutter in a closed position closing said outlet conduit; characterised in that said shutter projects from a second flat surface of said plate opposite said first surface; said elastic member acting on said second surface at inclined portion along a line parallel to said edge as to form a predetermined lever arm.

The internal combustion engine fuel gas feed devices produced so far have had three basis drawbacks. The first one is too long the so called opening dead time preventing fuel gas feed control in real time, and the other one is the variable amount of fuel gas fed to the engine cylinder, as a result of which the systems do not comply with effective exhaust gas contamination standards; the third one is lack of temperature stabilisation while the device is operating. The purpose of the presently performed invention works is constructing a device to feed fuel gas to combustion engines, allowing for effective requirements for combustion engine feed systems. The device must be highly reliable, cheap in production and should eliminate said drawbacks of similar already known assemblies.

The invention device, feeding fuel gas to an internal combustion engine, has at least one solenoid valve controlled to feed gas to a corresponding cylinder of the engine; the solenoid valve comprises a gas manifold and at least one outlet valve for said fuel gas, a relevant shutter, which is carried by the armature activated by a relevant coil of the electromagnet so as to connect the inlet manifold with the outlet conduit; said armature has the form of a spatial lever rotating about the edge indicated by the external surface and inclined portion of the armature, has a flat resistance surface formed on the surface of the flat spring and an elastic member acting on the armature with a predetermined elastic force sufficient to hold the shutter in a position closing the outlet in case no power is supplied to the electromagnet. A shutter, on the contact side with the sleeve, creates a uniform surface and when closed is perpendicular to the nozzle axis, and an elastic member acts on the surface within the inclined area on the surface of the armature to form a variable lever arm as a function of the valve opening angle. The aperture is formed in such a way that the surface of the shutter is perpendicular to the gas outlet axis in a closed position, whereas there is a flat spring between the aperture and electromagnet coil core constituting a resistance area for the aperture contact line. Advantageously, when an elastic member is a line of elastic bodies of a shape close to a spheroid connected into one row, where each of the connected bodies is dedicated for a separate armature, and which is engaged into a recess formed in the casing body so that its longitudinal axis is parallel to armatures contact lines, and, advantageously, at least one side of the row constituting an elastic member is bevelled. In a particularly advantageous example of the invention, an elastic member dedicated for each armature is an elastic body of a shape close to a spheroid or a spring, especially a conical spiral spring advantageously engaged in a recess in the casing body. In an especially advantageous case, a diaphragm has the form of a disk. The inclined armature surface forms an angle □ less than 15° with the surface of the flat spring and the edge rounded with a radius not lower than 1 mm, whereas angle □ between the outmost surface of the armature and the surface of the flat spring is substantially lower than the angle between the inclined surface and the outmost aperture surface. A solenoid valve, preferably, has a magnetic core and is enclosed within a casing comprising bodies connected to one another in a gastight manner along the surface perpendicular to said outlet conduit, wherein one body has a gas inlet manifold and a hole connected with the engine cooling system and houses an electromagnet, and the other body of the casing has an outlet hole and houses an armature; an electromagnet keeper serves as a holding unit for the electromagnet core and the flat surface of the flat spring is parallel to the bodies partition plane. It is advantageous if the outlet conduit has calibrated nozzles fitted in an irremovable manner.

In a special example of the invention, a solenoid valve has at least two electromagnets controlling two corresponding outlet nozzles, which, advantageously, are substantially parallel to one another and the valve manifold has manifold holes connected with outlet holes which are connected with corresponding cylinders of the engine. The manifold is connected with the body housing solenoid valves by the body in which gas proof outlet nozzles are engaged, and moreover the manifold has a calibrated fitting which makes it possible to use the device for all engine types. To make the invention device more universal, said outlet conduits may have nozzles of different inside diameters and each nozzle may be inserted into a corresponding recess of the body in a gastight manner.

To increase efficiency of the invention device, electromagnets are controlled selectively and in phases by corresponding width modulation pulses (PWM) generated by an electronic control unit on the basis of signals indicating the manner of engine operation.

Pulse width modulation (PWM) is understood as a known method of current or voltage signal control consisting in modulating the pulse width, used in amplifiers, pulse feeders and systems controlling the operation of direct current engines.

The PWM system feeds the invention device directly or through the low pass filter averaging the voltage in one PWM stroke. After the timing unit stroke, the output signal is set at a high level for the time proportionate to the value of a controlling variable.

Using this method in the invention device constitutes a new characteristic of the invention and considerably reduces power losses in the control system as well as guarantees considerable accuracy of device control.

In a special case of the invention, one elastic member is assignable to all electromagnets and, advantageously, constitutes a line comprising bodies of a shape close to a spheroid, made of an elastic material, in which each of component bodies is assigned to a corresponding valve. The force and arm of the lever formed by action of an elastic member on the surface is variable as a function of the valve opening angle.

In another version of the invention, an elastic member is a body of an elastic material and assigned to one armature, the shape of which is close to a spheroid, and which is engaged in a recess in the casing body so that its longitudinal axis is parallel to the aperture contact line. To prevent possible movement in said recess, at leas one side of the body constituting an elastic member can be bevelled.

In yet another version of the invention, an elastic member is a spring of an elastic material assigned to one armature, in particular a conical spiral spring, engaged advantageously into a recess in the casing body.

The invention device may have valves controlled by an electronic control unit, of a frequency not less that the frequency of particular engine cylinders operation.

According to the invention, the device is characterised in that it meters fuel in a stable manner, with the irregularity less than 1% and opening dead time below 1 millisecond, and has the system for stabilising operation temperature.

A preferred non-limiting embodiment of invention is shown by way of example with reference to the accompanying drawings, in which:

Fig. 1 shows a schematic section of the combustion engine feed system, comprising the invention device, injecting gas into the intake manifold of the engine;

Fig. 2 shows a vertical cross section of the device about the axis of the solenoid valve;

Fig. 3 shows a section of the solenoid valve located in the invention device with a mass spring of an elliptic section.

Fig. 3a shows a section of the solenoid valve located inside the invention device with a coil spring;

Fig. 4 shows a horizontal section of the invention device for supplying the four-cylinder engine.

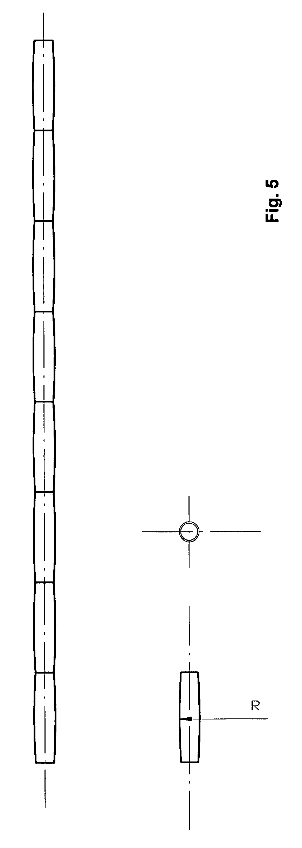

Fig. 5 shows significant construction characteristics of springs made of an elastic material.

Fig. 6 shows a model of the invention device used for flow simulations.

Fig. 7 shows a distribution of temperatures in the invention device and a distribution of gas flowing through the bus at an input temperature of gas at the level of: A = 10°C, B = 30°C, C = 60°C.

Fig. 8 shows a distribution of static pressure in the invention device working in a steady state condition;

Fig. 9 shows how gas flow speed changes in the nozzle of the invention device.

Fig. 10 shows how the flow speed changes in outlet conduits of the invention device.

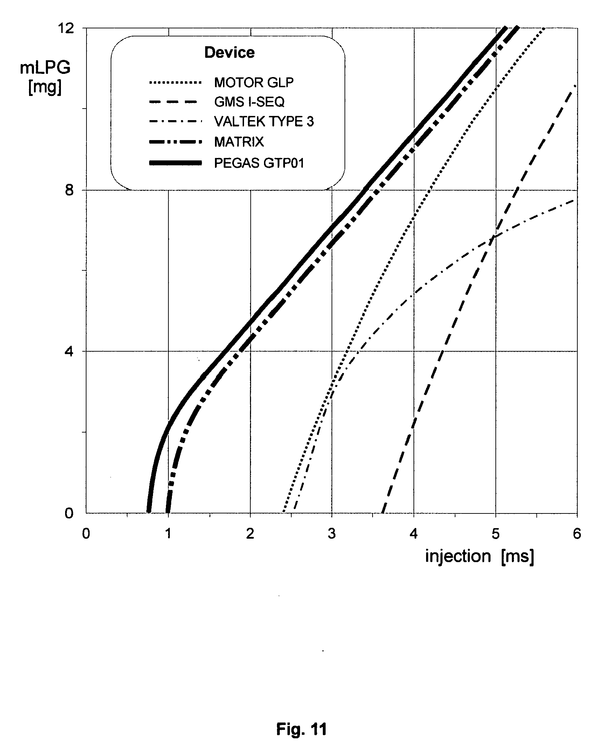

Fig. 11 shows a chart of relationships between the capacity of the invention device and valve opening time.

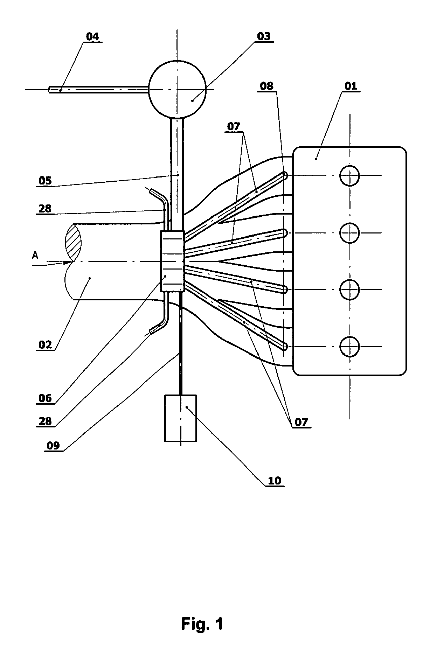

Fig. 1 shows a simplified diagram of fuel gas feed system for fuels such as LPG, CNG, hydrogen etc, combustion engine, e.g. Otto's engine (**01**), which may have 4 cylinders, with each cylinder being fed by the air and fuel mix created in each channel of the intake manifold (**02**). The air to manifold (**02**) is fed by air intake (**A**) from the air filter chamber (not shown in the figure). The gas feed system comprises gas pressure reducer (**03**) connected with the fuel tank (not shown in the drawing) by conduit (**04**).

The pressure reducing valve (**03**) is connected by means of a feed conduit (**05**) to the device supplying the engine with fuel gas generally indicated as (**06**) and supplying gas fuel to corresponding engine (**01**) cylinders, for instance, by means of four flexible connecting hoses (**07**), each connected by means of a connector (**08**) with an appropriate inlet conduit of the intake manifold (**02**). By means of a bundle of conduits (**09**), the feed device (**06**) is connected with an electronic control unit (**10**) injecting a precisely metered amount of fuel into each of the cylinders as a function of signals corresponding to the engine (**01**) significant operational values, such as engine rotational speed, torque, acceleration pedal position, external temperature, cooling water temperature, signals from the lambda probe, etc. Stabilisation of the device (**06**) temperature is enabled by a connection between the cooling unit and the engine by means of conduits (**28**).

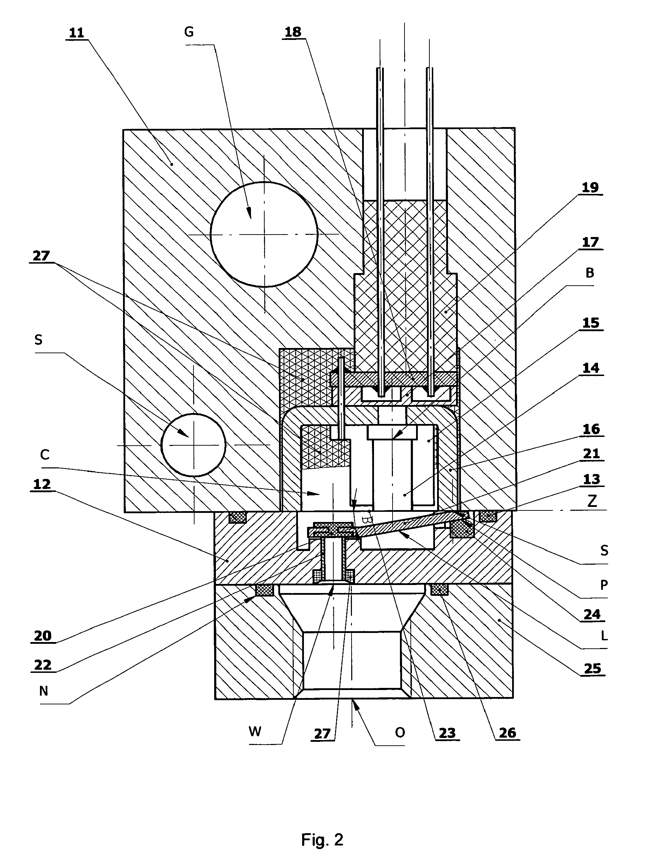

For each of engine (**01**) cylinders, the feed device (**06**) is provided with at least one individual solenoid valve (presented in section in Fig. 2). The valve is housed in a casing comprising two bodies (**11** and **12**) connected in a known manner along the surface (**Z**) with a gastight seal (**13**) inserted between them. The body (**11**) contains a gas manifold (**G**) connected with feed conduit (**05**) coupling the feed device (**06**) and the reducing valve (**03**) by means of a connector (not shown in the figure).

Said body (**11**) constitutes a protective shield for at least one of the control electromagnets (**B**) which consists of a core (**14**) made of magnetic material and an electric coil (**15**). The core (**14**) is attached to a keeper (**16**) made of magnetic material and mounted inside the body (**11**) in a known manner, separated from it by means of a spacer (**17**), a printed circuit board (**18**) for the coils and a gastight gland (**19**) for the electric connections. Thickness of the spacer (**17**), printed circuit board (**18**) for the coils and the gastight gland (**19**) for the electric connections has been appropriately adjusted so that the surface of the core (**14**) and the electromagnet keeper (**16**) lies in the bodies (**11**, **12**) contact plane (**Z**).

Both bodies (**11** and **12**) form a chamber (**C**) connected with gas manifold (**G**) and the outlet hole (**W**) constituting a gas circulation system described in further sections. The chamber (**C**) holds the outlet conduit's (**W**) disk-shaped shutter (**20**) made of elastomeric material and moved in a known manner by the electromagnet armature (**21**) defined as a spatial plate. To be more precise, the electromagnet armature (**21**) is provided with a flat shutter (**20**) forming, with the electromagnet armature (**21**) surface, one plane (**R**) whose surface is perpendicular to the axis of the nozzle (**22**) and the outlet hole (**W**). The plate (**21**) has two nicks for its self-aligning installation inside the body (**12**) by means of two fasteners (**D**) located in the rib (**E**) forming the armature (**21**) seat (**H**).

As shown in Figure 2, the device designed according to the invention is provided with the armature (**21**) rotating about the line of contact with a flat spring (**23**). The line of contact is defined by the armature (21) edge (**I**) touching the flat surface of a spring (**23**) lying on a flat surface formed by the core (**14**) and the electromagnet keeper (**16**). The edge (**I**) is limited by an inclined surface (**J**) and the armature (**21**) surface (**K**) opposite surface (**L**). The inclined portion (**J**) and said surface (**K**) form an angle (□) less than 15°. The seat (**M**) between the rib (**E**) and the body (**12**) contains a body shaped similarly to a spheroid constituting a flexible member (**24**) made of elastic material acting on the surface (**L**) of the armature (**21**) in the zone opposite to the inclined surface (**J**). A diameter of the flexible member (**24**) is thus graded so that it is generates an elastic force (**F**) facilitating standard maintenance of the moving spacer (**20**) in a position closing the outlet hole (**W**).

The advantage of the invented device consists in placing the edge (**I**) perpendicularly to the armature (**21**) axis on the surface of the easily replaceable flat spring so that the length of the lever arm of the force (**F**) exerted by elasticity of the flexible material (**24**) is variable and dependent on the angle of the lever rotation about the axle (**I**). In order to prevent sudden deterioration of the spring (**23**) surface condition, the edge (**I**) is rounded with a radius exceeding 1 mm. Also, to improve operation of the valve, the armature (**21**) surface (**J**), when the shutter (**20**) is in a closed position, forms an angle (□) with the flat spring (**23**) surface being basically smaller than the angle (□) between said surface (**K**) and the flat spring (**23**) surface.

An advantage of the device designed according to the invention is also the fact that the outlet hole (**W**) of the solenoid valve (Fig. 2) contains a calibrated nozzle (**22**) attached to the body (**12**) in a manner preventing the user from replacing the nozzle whatsoever, thus changing the default calibration.

The calibrated nozzle (**22**) is assembled in a manner ensuring its slight projecting above the body (**12**) surface. The nozzle has a rounded surface of contact with the shutter so that, under the impact of the force generated by the flexible member (**24**) acting on the armature (**21**) with certain force, the shutter (**20**) closes the gas outlet thus constituting the gas-tight seal while the solenoid valve is in the volatage-free condition.

In order to fit the nozzle (**22**) inside the body (**12**), during the installation, a value of the nozzle's (**22**) section projecting out of the body (**12**) is precisely determined and fixed by pouring a chemosetting material (**27**).

An advantage of the device designed according to the invention is also the fact that the solenoid valve (Fig. 2) supplying each of the engine (**01**) cylinders can hold at least two distinct electromagnets (**B**) being basically identical and enclosed in one casing formed by the bodies (**11**, **12**). The electromagnets (**B**) are placed in one chamber (**C**) and receive gas by means of the same feed line (**G**) located in the body (**11**), but also each of them is assigned an individual outlet conduit (**W**) as well as a separate, properly adjusted calibrated nozzle (**22**).

The manifold (**25**) is attached to the body (**11**) through the other fbody (**12**) by means of bolts, and receives gas from at least two outlet holes (**W**). The manifold (**25**) is provided with a recess (**N**) for placing a gastight seal (**26**) inside and a threaded hole (**O**) to screw in the nozzle for attachment of the hose (**07**) connecting the valve with the collector's intake conduit (**02**) for the corresponding engine (**01**) cylinder. Another advantage of the invention is the fact that the outlet nozzles from the manifold (**25**) mounted in the hole (**O**) are thus calibrated so that they do not require replacement for a given group of engine types.

A definite advantage of the invention is also providing the calibrated nozzles (**22**) with diversified diameters for the sake of inducing various gas flows depending on the engine demand. The electronic control unit (**10**) activates the solenoid valves depending on the engine (**01**) operating conditions and generates control impulses of modulated width in order to regulate the operation of solenoid valves (**B**) using pulse width modulation (PWM). Consequently, the electronic control unit (**10**) opens the shutters (**20**) for a variable period of time during the intake phase for the corresponding engine (**01**) cylinder which makes the operation of the engine correct.

For engine (**01**) feed shown in Figure 1, each cylinder can be assigned at least two electromagnets. For each engine, one feed device (**06**) can be assigned, containing several solenoid valves, the number of which equals the number of engine (**01**) cylinders or its multiple.

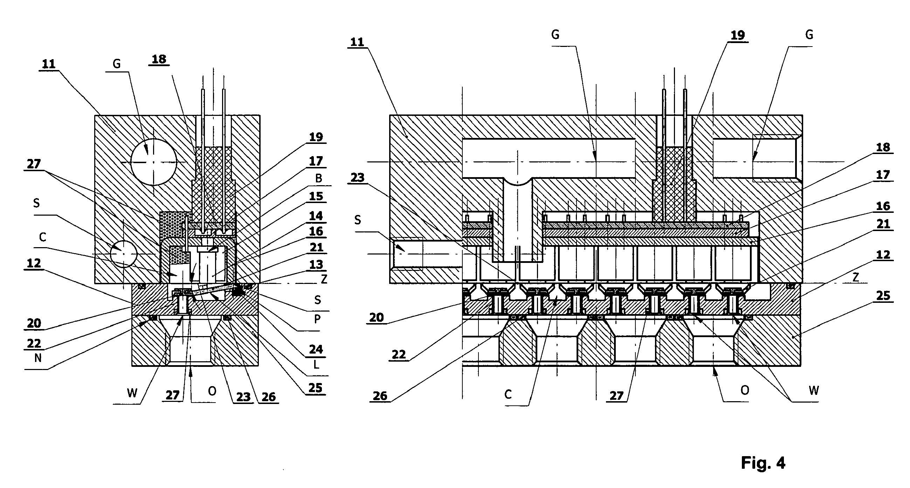

Figure 4 shows a diagram of the feed device (**06**) designed according to the invention for a four-cylinder engine (**01**), in which all four solenoid valves, each holding two electromagnets (**B**), are integrated in one casing. In this feed device, all electromagnets are placed in one row and in the same casing composed of bodies (**11**, **12**), where all eight electromagnets attached to the printed circuit board (18) through a spacer (**17**) are installed.

The body (**11**) is provided with a manifold (**G**) parallel to the printed circuit board (**18**) and the insulating plate (**17**) as well as two or more distribution holes perpendicular to the printed circuit board (**18**) and the insulating plate (**17**) supplying gas to the chamber (**C**). The collector (**G**) is connected with a feed conduit (**05**) (Fig. 1) of the pressure reducing valve (**03**). The gas distribution ducts are connected with the chamber (**C**) common to all solenoid valves.

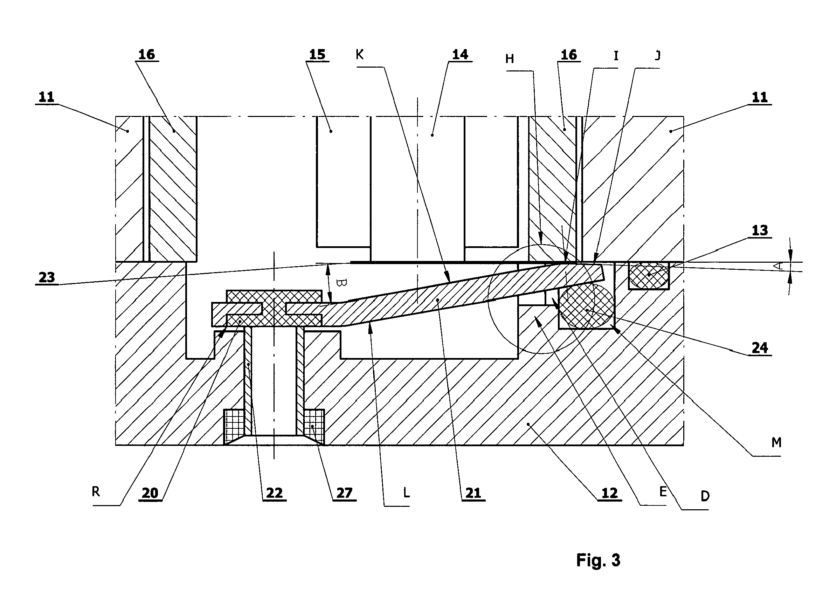

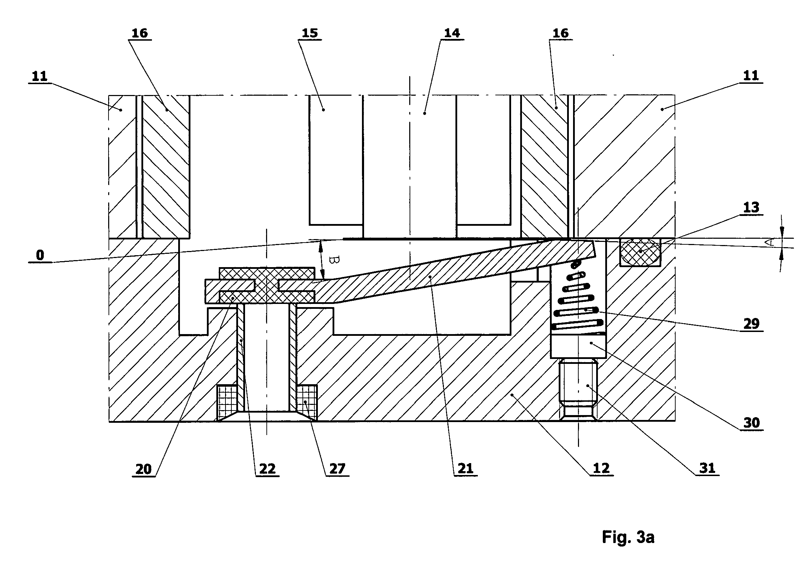

Said body (**12**) is attached to ta body (**11**) by means of bolts (not shown in the figure) along the plane (**Z**) and tighted with a seal (**13**). Said body (**12**) constitutes a support for the nozzle (**22**) pairs of the outlet holes (**W**) for individual solenoid valves (**B**) in the same manner as the supply device (**06**) shown in Figures 2 and 3. The shutters (**20**) are pressed to the nozzle (**22**) by the lever (**21**) using the elastic members (**24**) fixed in said seat (**M**) and made of elastic material of spheroid-shaped section dedicated for each armature (**21**) individually or in the form of a series of spheroid-shaped elastic bodies joined in one row in which every component body is assigned to a corresponding armature.

The whole structure also holds the body of the main manifold (**25**) attached to the body (**11**) through the other body (**12**) by means of four bolts (not shown in the figure) and is provided with four outlet holes (**O**), each one receiving gas supplied by the corresponding pair of electromagnets (**B**). Each conduit of the engine manifold is connected with a hole (**O**) to which the connecting conduit fittings (**07**) of the corresponding engine (**01**) cylinder are attached, and each of the fittings is appropriately calibrated so that it can be adjusted to the flow rate of every engine type.

In the invention device version shown in Figure 03a, unlike in the elastic barrel (**24**), the edge (**I**) of the armature (**21**) is maintained in the correct position by means of a coil spring (**29**) of tension force regulated by a spring follower (**30**) and a bolt (**31**).

The device designed according to the invention is characterised by advantageous constructional and operational properties described above which are not commonly applied in similar devices. In particular, the edge of the armature (**21**) surface eliminates the risk of the contact line wear by the spring (**23**) surface and reduces friction which makes it possible to obtain precise and rapid operation of the solenoid valve. Moreover, the entire tolerance for production or assembly of components, particularly the frames (**11, 12** and **25**), does not influence the assumed length of the shutter (**20**) lever arm.

Variable length of the arm of force (**F**) lever as well as an elastic member (**24**) shape and a flat spring (**23**) eliminate the necessity of applying additional return springs which, in turn, makes the device production process easier. Construction entailing application of more than one electromagnet (**B**) for appropriate control of gas consumption from the nozzles (**22**) supplying each of the engine (**01**) cylinders ensures greater flexibility of engine (**01**) operation. Application of non-replaceable nozzles (**22**) significantly extends an operation period of the device constructed in accordance with the invention. Finally, placing the valves in one casing also contributes to increased compactness of the device and reduces its production costs.

Obviously, it is possible to modify the device version described in the present study in accordance with the invention without changing the scope of patent claims. These modifications may, for instance, be introduced in the form of a solenoid valve and an appropriate armature (**21**), and a complete elastic member (**24**) may be replaced with a coil-type or flat spring.

Construction of the feed device (**06**) may be module-based which makes it possible to obtain a device of a variable number of modules, whereas the ends of intake and outlet conduits for the utilities delivered may be designed to be connected with the other corresponding conduits in a known manner.

The solenoid valve of each engine cylinder may also be provided with more than two electromagnets which, in turn, may be installed in the casing in any position. Iinternal combustion engines as well as solenoid valves in the feed devices may be arranged in any configuration.

Operational properties of the device designed according to the invention as well as its functioning and efficiency have been analysed in the course of a series of technical tests.

**1. Examination of heat exchange in the injection bus**

Simulation examinations of the injection bus comprised the analysis of heat exchange and the analysis the flow phenomena.

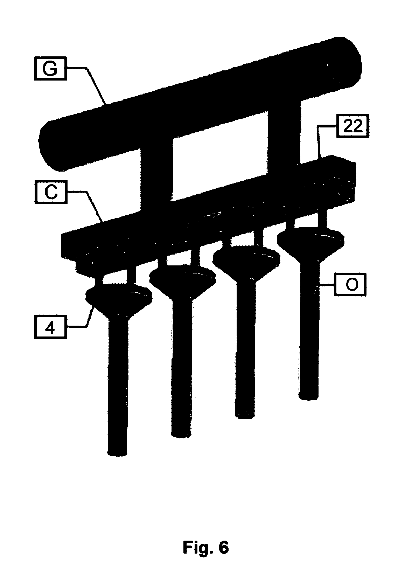

For the heat exchange examinations, a three-dimensional model of the bus developed specially for that purpose was used. It is shown in figure 6.

The following assumptions were taken for the model:

a) calculations were conducted in steady-state conditions, i.e. constant thermal conditions as well as constant conditions of the medial flow through the bus,

b) the bus is made of homogenous material - the material assumed was steel,

c) two media are flowing through the bus:

- propane gas at three temperatures: 10, 20 and 60°C,

- water, being the engine cooling liquid, at the temperature of 90°C ,

d) constant flow rate of the media through the bus was assumed corresponding to average operating conditions of the engine, i.e.:

- propane gas: 10 g/s,

- cooling liquid: 100 g/s.

The calculations were conducted for 6 cases of bus operation: two variants of cooling liquid flow (with the cooling liquid flow at the temperature of 90 °C and without the flow) at three gas intake temperatures: 10, 20 and 60°C. The analysis was performed for selected characteristic planes of the bus section shown in Figure 6.

Heat exchange was described in accordance with the principle of enthalpy behaviour for liquids expressed by means of the following equation:

$$\frac{\partial \rho h}{\partial t} + \frac{\partial}{\partial x_j}(\rho h u_j + F_{h,j}) = \frac{\partial p}{\partial t} + u_j \frac{\partial p}{\partial x_j} + \tau_{ij} \frac{\partial u_i}{\partial x_j} + s_h$$

(1)

where $h$ is static enthalpy defined as:

$$h \equiv \bar{c}_p T - c_p^0 T_0 + \sum Y_m H_m = h_y \sum Y_m H_m$$

(2)

$T$ - temperature,

$Y_m$ - mass fraction of the mixture component m,

$H_m$ - heat of the m component formation,

$c_p$ - mean specific heat at constant pressure,

$c_p^0$ - reference specific heat at the temperature To,

$F_{hj}$ - diffusion of the energy flux in the $xj$ direction,

$s_h$ - energy source,

$h_t$ - thermal enthalpy.

**1.1 Simulation results**

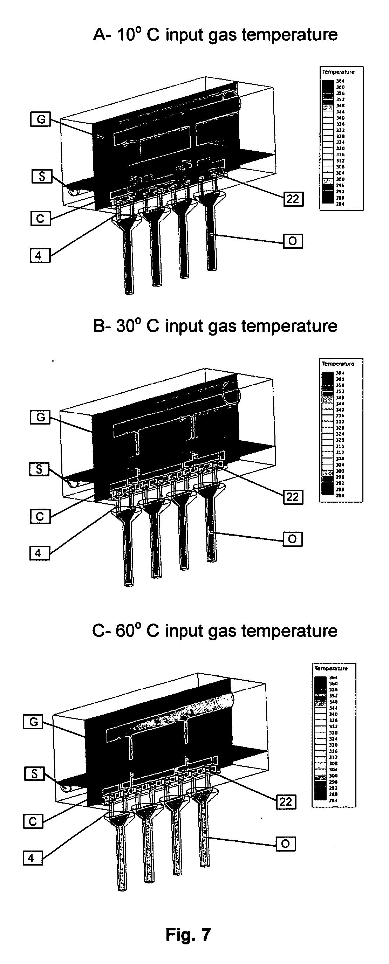

Figure 7 shows the temperature body from the engine cooling liquid flowing through the conduit visible in the foreground. Simultaneously, gas is heated by the bus body walls. It is noticeable that the temperature of gas flowing out of the bus is higher than the temperature of the gas flowing in. Results of the gas mean temperature at the bus outlet are provided in Figure 7. This figure shows gas temperatures for the variant with the engine cooling liquid flowing through the bus.

**2. Gas flow examination**

Figure 7 shows the device model designed according to the invention used for simulation calculations of flow. The device was divided into several sections:

-   manifold (**G**) supplying gas to the device together with the gas chamber (**C**) feed channels,

-   gas chamber (**C**) housing valves, common for all of them,

-   gas nozzles (**22**),

-   engine feed pipes (**O**).

The following assumptions were taken:

a) calculations were performed both in the steady-state conditions for a permanent gas flow through open valves and in the non-stationary state with gas valves open,

b) propane was assumed as the working medium,

c) absolute pressure of gas in the device's intake manifold was assumed as 200 kPa,

d) absolute pressure of gas in the intake manifold was assumed as 80 kPa,

e) temperature of gas at the device's intake was assumed as 60 °C,

f) for simplification, calculations performed in the non-stationary state assumed permanent opening of gas valve and expenditure was controlled by changing boundary conditions of the gas flow at the device's outlet,

g) calculations were performed assuming the High K-□ Reynolds Number turbulence model,

h) calculations were performed assuming a perfect gas density model.

Calculations of gas flow performed in accordance with the equations describing the mass and momentum conservation principle for compressible fluids in tensor notation:

$$\frac{\partial \rho}{\partial t} + \frac{\partial}{\partial x_j}(\rho, u_j) = s_m$$

$$(3)$$

$$\frac{\partial \rho u_i}{\partial t} + \frac{\partial}{\partial x_j}(\rho u_j u_i - \tau_{ij}) = -\frac{\partial p}{\partial x_i} s_i$$

(4)

where:

$t$ - time,

$x_i$ - Cartesian layout ($i = 1, 2, 3$),

$u_i$ - absolute velocity in the xi direction,

$p$ - pressure,

$\rho$ - density,

$\tau_{ij}$ - stress tensor component,

$s_m$ - mass source,

$s_i$ - momentum source component.

**2.1 Simulation results**

**Steady state**

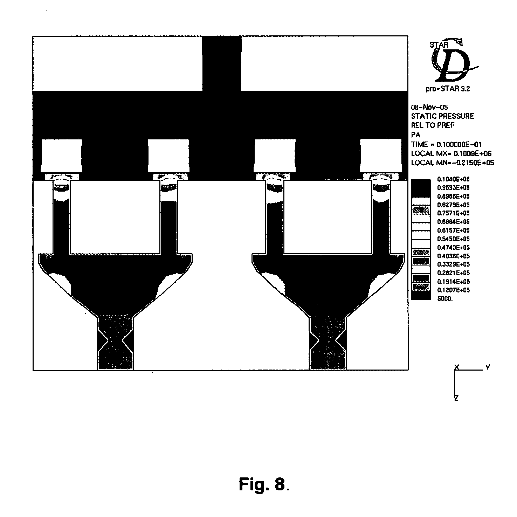

Figure 8 shows the static pressure distribution in the device designed according to the invention operating in steady state conditions. One may notice that, in the area under the valve, there is the largest drop of gas pressure - from ca. 100 kPa of overpressure to ca. 19 kPa. This drop takes place in a short section below one third of the gas nozzle length.

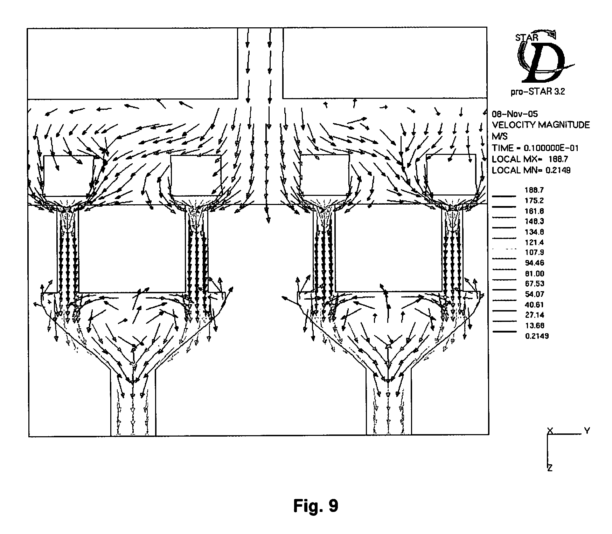

Another drop of gas pressure takes place in the area of the outlet from the manifold cone of the bus outlet conduit. There are areas of sudden drop of pressure visible in the initial section of the outlet conduit by the walls. It is related to large velocity of gas flow and the shape of the stream in that location. It is clearly visible in Figure 9 showing velocity vectors for gas stream.

It can be derived from Figure 9 that the highest flow velocity values are to be noticed in the area of the highest expansion, i.e. near the valves and inside the gas nozzle conduit. These velocities do not reach the critical flow values.

**Non-stationary state**

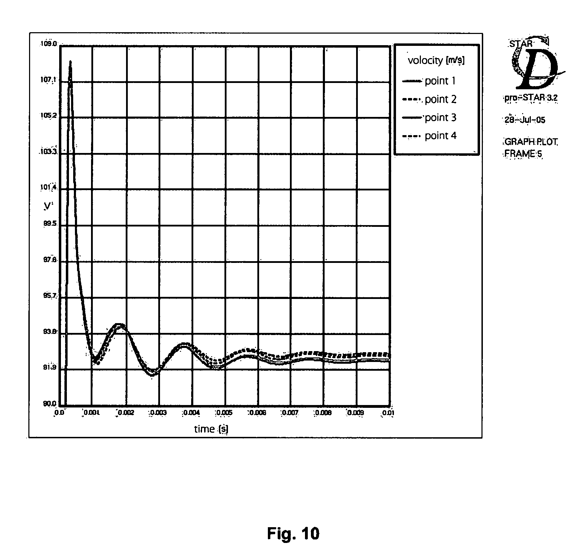

Results of the flow velocity analysis in the outlet pipes of the device designed according to the invention shown in Figure 10 evidence the fact that the velocity course for the individual pipes is very similar in conditions. The mean value of stable flow reached after ca. 7ms gets values whose discrepancies do not exceed 1%. During stabilisation of flow velocity in individual pipes, it can be noticed that the velocity values are even closer to one another and their dispersion does not exceed 0.5%.

The discrepancies of flow velocity occurring in the individual outlet pipes are insignificantly small and do not influence correctness of the supply system operation. The smallest variations take place in the gas outlet pipes which guarantees correct supply of a vehicle engine - constancy of supply pressure and gas fuel consumption.

**Claims**

1.   A fuel gas feed device for an internal combustion engine comprising at least one solenoid valve controlled to feed gas to a corresponding cylinder of the engine; said solenoid valve comprising a gas manifold and at least one outlet conduit for said fuel gas, a corresponding shutter carried by an armature being activated by a corresponding electromagnet to connect said inlet manifold with an outlet conduit; said armature having the form of a spatial lever rotating about an edge located between an external surface and an inclined portion of said armature, and contacting a flat surface of the flat spring, and an elastic member acting on said armature with a predetermined elastic force sufficient to normally keep such shutter in a closed position closing said outlet hole in case no power is supplied to the electromagnet, **characterised in that** said shutter (**20**), on the side where it contacts a sleeve (**22**) forms an even surface (**R**) with the armature and when closed is perpendicular to the nozzle axis (**22**), and an elastic member (**24**) acting on said second surface (**L**) at said inclined portion (**J**) on the surface of the armature (**21**) to form a variable lever arm as a function of a valve opening angle.

2.   A feed device as claimed in Claim 1 **characterised in that** said armature (**21**) is formed in such a way that the surface of the shutter (**20**) is perpendicular to the gas outlet axle in a closed position.

3.   A feed device as claimed in claim 1 **characterised in that** a flat spring (**23**), forming a resistance plane to the armature (**21**) contact line, between said armature (**21**) and a core of the electromagnet (**14**) coil .

4.   A feed device as claimed in claim 1 **characterised in that** an elastic member (**24**) forms a line of bodies of elastic material having the shape similar to a spheroid, connected in one row engaged in a recess of the casing body (**12**) so that its longitudinal axis is parallel to the armatures contact line, wherein, advantageously, at least one side of the row constituting an elastic member (**24**) is bevelled.

5.   A feed device as claimed in claim 1 **characterised in that** an elastic member (**24**) is an elastic body having the shape similar to a spheroid engaged in a recess in the casing body (**12**) so that its longitudinal axis is parallel to the armature contact line wherein, advantageously, at least one side of the body constituting an elastic member is bevelled.

6.   A feed device as claimed in claim 1 **characterised in that** an elastic member (**24**) is defined by a spring, in particular a conical spiral spring engaged advantageously in the recess in the casing body (**12**).

7.   A feed device as claimed in claim 1 **characterised in that** said shutter (**20**) is in the form of a disk.

8.   A feed device as claimed in claim 1 **characterised in that** said inclines plane (**J**) of said armature (**21**) forms with said surface (**K**) an angle (□) less than 15°, said edge being rounded with a radius (**R**) at least equal to 1 mm.

9.   A feed device as claimed in claim 1 **characterised in that** in a closed position said inside surface (**K**) of said armature (**21**) forms an angle (□) with the surface of the flat spring (**23**) substantially less that an angle between an inclined portion (**J**) and a surface of flat spring (**23**) in an open position.

10.   A feed device as claimed in one of claims 1 to 8 **characterised in that** said solenoid valve, advantageously having a magnetic core, is housed in a casing comprising two hollow bodies (**11**, **12**) connected to each other in a gastight manner along a plane (**Z**) perpendicular to said outlet conduit (**W**), a first of said hollow bodies having said inlet gas conduit (**G**) and a hole (**S**) connected with the engine cooling system and housing an electromagnet (**B**), and a second hollow body (**12**) of the casing having an outlet hole and housing an armature (**21**), wherein an electromagnet keeper holds an electromagnet core (**14**) and a flat surface of the flat spring (**23**) is parallel to plane (**Z**).

**11.** A feed device as claimed in one of claims 1 to 10 **characterised in that** said outlet conduit (**W**) has calibrated nozzles (**22**) fitted irremovably in the hollow body (**12**)

**12.** A feed device as claimed in one of claims 1 to 10 **characterised in that** said solenoid valve comprises at least two electromagnets (**B**) in the hollow body (**2**), controlling two corresponding outlet conduits, preferably being substantially parallel.

**13.** A feed device as claimed in claim 12 **characterised in that** said manifold (**25**) has manifold holes (**O**) connected with corresponding cylinders of the engine (**01**) and is connected with the hollow body (**11**) by a gas tight body (**12**).

**14.** A feed device as claimed in claim 12 **characterised in that** said manifold (**25**) has a calibrated fitting making it possible to use the device in any type of the engine.

**15.** A feed device as claimed in one of claims 11 to 13 **characterised in that** said outlet conduits (**W**) have nozzles (**22**) of different inside diameters.

**16.** A feed device as claimed in one of claims 11 to 14 **characterised in that** each of the nozzles (**22**) is inserted in a corresponding recess in the body (**12**) in a gastight manner.

**17.** A feed device as claimed in one of claims 11 to 15 **characterised in that** said electromagnets (**B**) are controlled selectively and in phase by corresponding modulated width pulses generated by an electronic control unit (**10**) on the basis of signals indicating operation of the engine (**01**)

**18.** A feed device as claimed in claim 1 **characterised in that** an elastic member is assigned to one plate (**21**) of the armatures of said electromagnets (**14**, **15**).

**19.** A feed device as claimed in claim 1 **characterised in that** an elastic bar (**24**) is common to all plates (**24**) of the armatures of said electromagnets (**14**, **15**).

**20.** A feed device as claimed in claim 1 **characterised in that** the force and arm of the lever created by acting of an elastic member (**24**) on the surface (**L**) are variable as a function of valve opening time.

**21.** A feed device as claimed in claim 1 **characterised in that** said valves (**15**) are controlled by an electronic control unit (**10**) operating at a frequency not less that the frequency of operation of subsequent cylinders of the engine.

**Fig. 1**

Fig. 2

Fig. 3

Fig. 3a

Fig. 4

Fig. 5

R

**Fig. 6**

## A- 10° C input gas temperature

## B- 30° C input gas temperature

## C- 60° C input gas temperature

**Fig. 7**

STAR
pro-STAR 3.2

08-Nov-05
STATIC PRESSURE
REL TO PREF
PA
TIME = 0.100000E-01
LOCAL MX= 0.1009E+06
LOCAL MN=-0.2150E+05

0.1040E+06
0.9693E+05
0.8986E+05
0.8279E+05
0.7571E+05
0.6864E+05
0.6157E+05
0.5450E+05
0.4743E+05
0.4036E+05
0.3329E+05
0.2621E+05
0.1914E+05
0.1207E+05
5000.

**Fig. 8.**

Fig. 9

**Fig. 10**

**Fig. 11**

**REFERENCES CITED IN THE DESCRIPTION**

**Patent documents cited in the description**

- US 5653422 A
- EP 1267065 B1